# EUROPÄISCHE PATENTANMELDUNG

(11) **EP 0 810 228 A2**
(43) Veröffentlichungstag der Anmeldung: **03.12.1997**
(21) Anmeldenummer: 97108007.2
(22) Anmeldetag: 16.05.1997
(51) Int. Cl.: C07F 7/16

(54) **Verfahren zur Herstellung von Alkylhalogensilanen**

(30) Priorität: 28.05.1996 DE 19621306
(71) Anmelder: BAYER AG, 51368 Leverkusen (DE)
(72) Erfinder: Steiner, Matthias-Sven, Dr., 51373 Leverkusen (DE); Degen, Bruno, Dr., 53804 Much (DE); Wagner, Gebhard, Dr., 51519 Odenthal (DE); Licht, Elke, Dr., 51381 Leverkusen (DE); Schulze, Manfred, Dr., Verstorben (DE)

(57) **Zusammenfassung**

Die vorliegende Erfindung betrifft ein Verfahren zur Herstellung von Alkylhalogensilanen durch Umsetzung einer Kontaktmasse, die neben Silicium und mindestens einem Promotor noch Kupfer und/oder mindestens eine kupferhaltige Verbindung als Katalysator enthält, mit einem Alkylhalogenid.

## Beschreibung

Die vorliegende Erfindung betrifft ein Verfahren zur Herstellung von Alkylhalogensilanen durch Umsetzung einer Kontaktmasse, die neben Silicium und mindestens einem Promotor noch Kupfer und/oder mindestens eine kupferhaltige Verbindung als Katalysator enthält, mit einem Alkylhalogenid.

Das grundlegende Verfahren zum Herstellen von Methylchlorsilanen ist die direkte Umsetzung von gemahlenem Silicium mit Methylchlorid in Gegenwart von Kupfer als Katalysator. Die Umsetzung ist dem Fachmann als "Rochow-Synthese" bekannt und in der US-A 2 380 995 beschrieben.

Nach diesem Verfahren erhält man eine Mischung von Methylchlorsilanen, bei der Dichlordimethylsilan (Di) den Hauptanteil stellt. Darüber hinaus bilden sich Methyltrichlorsilan (Tri) sowie weitere Produkte, wie z.B. Trimethylchlorsilan (Mono), Tetramethylsilan (TMS), Methylhydrogendichlorsilan (MeH) und höhersiedende Methylchlordisilane (PS).

Seit der Entdeckung der Synthese hat es eine Vielzahl von Aktivitäten gegeben, die sich damit beschäftigten, das Verfahren zur Durchführung der Synthese zu verbessern und den Anteil an Dichlordimethylsilan zu erhöhen, d.h. die Synthese möglichst selektiv im Hinblick auf die Bildung von Dichlordimethylsilan zu führen.

Letzteres erreicht man vor allem durch das Beachten von Reinheitskriterien bezüglich der Rohstoffe und durch den gezielten Einsatz von Promotoren. Bekannte Promotoren sind dabei gemäß EP-A 223 447 Zink, Zinn und Phosphor, elementar oder in Form ihrer Verbindungen. Aus EP-A 391 133 ist bekannt, neben Zink und gegebenenfalls Zinn auch flüchtige Phosphorverbindungen als Promotoren einzusetzen.

In der Vergangenheit wurde schwerpunktmäßig die Ausbeutesteigerung sowie Verbesserung der Di-Selektivität bearbeitet. Das Nebenproduktspektrum ist aber aus wirtschaftlichen Gründen ebenso wichtig. Gängige Kontaktmassen weisen z.B. den Nachteil auf, daß der MeH-Anteil, ein Indiz für unerwünschte Crack-Prozesse des Methylchlorid-Alkylchlorsilangemisches, zu hoch ist.

Aufgabe der vorliegenden Erfindung war daher die Bereitstellung eines Verfahrens zur Herstellung von Alkylchlorsilanen, das sich durch einen geringen Anteil an MeH auszeichnet. Zudem sollte das Verfahren die Herstellung von Alkylchlorsilanen mit einer hohen Selektivität und guter Produktionsrate ermöglichen.

Überraschenderweise wurde nun gefunden, daß der Einsatz von Selen und/oder Tellur und/oder mindestens einer selen- und/oder tellurhaltigen Verbindung als Promotor diese Anforderungen erfüllt.

Gegenstand der vorliegenden Erfindung ist daher ein Verfahren zur Herstellung von Alkylhalogensilanen durch Umsetzung einer Kontaktmasse, die neben Silicium und mindestens einem Promotor noch Kupfer und/oder mindestens einer kupferhaltigen Verbindung als Katalysator enthält, mit einem Alkylhalogenid, wonach als Promotor Selen und/oder Tellur und/oder mindestens eine selen- und/oder tellurhaltige Verbindung eingesetzt wird. Dieser Promotor kann dem Silicium und/oder dem Kupfer und/oder der kupferhaltigen Verbindung zudosiert, d.h. physikalisch beigemengt oder in das Kupfer einlegiert werden. Vorzugsweise wird der Promotor dem Silicium und/oder dem Kupfer und/oder der kupferhaltigen Verbindung physikalisch beigemengt.

Der Einsatz von Selen und/oder selenhaltigen Verbindungen ist dabei bevorzugt.

Elementares Selen kann in allen bekannten Modifikationen sowie monokristallin eingesetzt werden. Einsetzbare selenhaltige Verbindungen im Sinne der Erfindung sind z.B. Verbindungen der Formeln Se₂F₂, SeF₂, SeF₄, SeF₆, Se₂Cl₂, SeCl₂, SeCl₄, Se₂Br₂, SeBr₂, Se₂Br₄, Se₂I₂, SeO₂F₂, SeOF₂, SeOCl₂, SeOBr₂ und/oder SeOF₄

Besonders bevorzugt wird das Selen elementar und/oder die selenhaltige Verbindung in Form von SeOCl₂, SeCl₄ und/oder Se₂Cl₂, ganz besonders bevorzugt SeOCl₂ eingesetzt

Ebenso einsetzbar sind die Oxide des Selens z.B. SeO₂ sowie Selenwasserstoff.

Die eingesetzten selenhaltigen Verbindungen können nach bekannten Methoden auch in-situ erzeugt werden.

Selen kann ebenso in Form von festen selenhaltigen Verbindungen, die die Elemente Al, Zn, Sn, Si, Cu, Fe, Ca, Ti, Au und/oder Ag enthalten, wie z.B. Verbindungen der Formel Al₂Se₃, FeSe, Fe₇Se₈, Fe₃Se₄, Fe₂Se₃, FeSe₂, TiSe, TiSe₂, Cu₂Se, Cu₃Se, CuSe, CaSe, SiSe, ZnSe, SnSe, Sn₂Se₂, Sn₂Se₃, SnSe₂, Ag₂Se, Au₂Se, eingesetzt werden.

Selenhaltige Verbindungen, die die Elementen Al, Zn, Sn, Si, Cu, Fe, Ca und/oder Ti enthalten, sind dabei bevorzugt.

In einer weiteren Ausführungsform kann das Selen und/oder die selenhaltige Verbindung dem für die Reaktion notwendigen Kupfer und/oder der kupferhaltigen Verbindung als Katalysator zulegiert und/oder physikalisch beigemengt werden. Die Zulegierung erfolgt dabei vorzugsweise während der Herstellung des Kupfers oder dessen Raffination.

Selen und/oder die selenhaltige Verbindung, gerechnet als Selen, wird vorzugsweise in einer Menge von 1 bis 3 000 ppm, bezogen auf Silicium, eingesetzt.

Als Promotor kann ebenfalls Tellur elementar und/oder in Form von tellurhaltigen Verbindungen eingesetzt werden.

Tellurhaltige Verbindungen, die in dem erfindungsgemäßen Verfahren eingesetzt werden können, sind Verbindungen der Formel TeX₂ für X = Cl, Br, I, TeX₄ für X = F, Cl, Br, I sowie TeF₆, Oxide, Alkalimetalltellurate (II) und (IV), Metalltelluride oder Addukte des TeCl₂ mit organischen Liganden.

Als tellurhaltige Verbindungen werden bevorzugt Alkalimetalltellurate (II) und (IV), wie z.B. MTeCl₃ mit M = Na, K, Cs, Rb und/oder RbTeCl₅, CsTeCl₅, K₂TeCl₆, RbTeCl₆, CsTeCl₆ sowie Addukte des TeCl₂ mit organischen Liganden, wie z.B. das Thioharnstoffaddukt TeCl₂·[SC(NH₂)₂] sowie elementares Tellur eingesetzt.

Metalltelluride im Sinne der Erfindung sind beispielsweise Al₂Te₃, Cu₂Te, Ag₂Te, AuTe, ZnTe sowie Alkali-/Erdalkalitelluride oder eine Te/Se-Legierung.

Besonders bevorzugt ist der Einsatz von Tellur elementar und/oder von tellurhaltigen Verbindungen in Form von CsTeCl₅, RbTeCl₆, CsTeCl₆, TeCl₂·[SC(NH₂)₂], Al ₂Te₃, Cu₂Te, ZnTe sowie TeCl₄.

Tellur kann weiterhin in Form von sauerstoffhaltigen Verbindungen, wie TeO₂ eingesetzt werden.

Tellur und/oder die tellurhaltige Verbindung, gerechnet als Tellur, wird dabei vorzugsweise in einer Menge von 1 bis 3000 ppm, bezogen auf Silicium, eingesetzt.

In einer weiteren Ausführungsform ist das eingesetzte Kupfer und/oder die kupferhaltige Verbindung als Katalysator mit Tellur und/oder Selen und Tellur dotiert. Es ist ebenfalls möglich Tellur und/oder Selen dem Katalysator physikalisch beizumengen. Auch die Kombination Legieren/physikalisch Beimengen ist möglich.

Die Dotierung erfolgt dabei vorzugsweise während der Herstellung des Kupfers oder dessen Raffination.

Als kupferhaltige Verbindung (Katalysator) im Sinne der Erfindung können alle gängigen Kupferkatalysatoren für die Rochow-Synthese eingesetzt werden, beispielhaft werden genannt: teiloxidiertes Kupfer (Cu°/Cu₂O/CuO) (US-A 4 500 724), Mischungen aus metallischem Kupfer und Cu₂O/CuO (DE-A 3 501 085), Cu₂Cl₂, CuCl₂ (US-A 4 762 940), Cu-Formiat (US 4 487 950), etc.. Bevorzugt wird teiloxidiertes Kupfer mit den Bestandteilen Cu⁰, Cu₂O und/oder CuO eingesetzt. Teiloxidiertes Kupfer hat dabei vorzugsweise folgende Zusammensetzung: Cu°: 0 bis 30 Gew.-%, Cu₂O: 30 bis 90 Gew.-% und CuO: 10 bis 60 Gew.-%, wobei die Summe aller Bestandteile 100 % ergibt. Der Katalysator, d.h. Kupfer und/oder eine kupferhaltige Verbindung, wird dabei vorzugsweise in einer Menge von 0,05 bis 10 Gew.-%, besonders bevorzugt 0,1 bis 7 Gew.-%, bezogen auf Silicium, eingesetzt.

Als Silicium im Sinne der Erfindung kann Silicium mit einer Reinheit von > 95 % eingesetzt werden. Bevorzugt wird Silicium mit einer Reinheit > 98 %. Die Teilchengröße des eingesetzten Siliciums kann beliebig gewählt werden, beträgt aber vorzugsweise zwischen 50-500 µm.

Als Silicium kann ebenfalls eingesetzt werden: verdüstes Silicium gemäß US-A 50 15 751 oder auch strukturoptimiertes Silicium gemäß EP-A 610 807, oder Silicium, hergestellt gemaß EP-A 673 880 bzw. EP-A 522 844.

Spezielle Siliciumsorten, wie z.B. in DE-A 40 37 021 oder EP-A 685 428 beschrieben, können ebenfalls verwendet werden.

Als Alkylhalogenide im Sinne der Erfindung werden alle gängigen C₁-C₈-Alkylhalogenide eingesetzt, bevorzugt Methylchlorid.

In einer Ausführungsform der Erfindung werden zusätzlich zu den Promotoren Selen und/oder Tellur und/oder mindestens einer selen- und/oder tellurhaltigen Verbindung andere bekannte Promotorsubstanzen eingesetzt. Als Promotorsubstanzen sind Zink oder Zinkverbindungen, Aluminium oder Aluminiumverbindungen, Zinn oder Zinnverbindungen, Phosphor oder Phosphorverbindungen, Schwefel- oder Schwefelverbindungen (wie z.B. gemäß DE-P 1 953 231, S. 7) bzw. Indium- oder Indiumverbindungen alleine oder in Kombination bevorzugt.

Als Verbindungen der Elemente Zn, Al, Sn, P, S und/oder In kommen z.B. Oxide, Halogenide, Legierungen o.ä. in Frage.

Die Promotorsubstanzen werden vorzugsweise, sofern sie vorhanden sind, in folgenden Mengen zugesetzt:
- - Zinn:: 5-200 Teile pro 1.000 000 Teile Silicium und/oder
- - Zink:: 10-10.000 Teile pro 1.000.000 Teile Silicium und/oder
- - Aluminium:: 0,01-1 Gew.-%, bezogen auf Silicium und/oder
- - Phosphor:: 20-2500 Teile pro 1.000 000 Teile Silicium und/oder
- - Indium:: 20-2500 Teile pro 1.000 000 Teile Silicium.
- - Schwefel:: 5-2000 Teile pro 1.000 000 Teile Silicium.

Die Promotorsubstanzen Sn, Zn, Al, P, In und/oder S können dem verwendeten Silicium bereits zulegiert worden sein (z.B. US-A 50 49 343, US-A 49 46 978, WO 94/00 799).

Bevorzugt werden Zinn, Aluminium, Phosphor oder Zink, alleine oder in Kombinationen, in elementarer Form oder in Form ihrer Verbindungen eingesetzt.

Das Verfahren wird üblicherweise in dem für die Rochow-Synthese gängigen Temperatur- und Druckbereich durchgeführt.

Bevorzugt ist eine Temperatur zwischen 280-390°C und ein Druck von 1 bis 10 bar.

Als Kontaktmasse wird eine physikalische Mischung aus Silicium und Kupfer und/oder mindestens einer kupferhaltigen Verbindung als Katalysator sowie mindestens einem Promotor definiert.

Diese Kontaktmasse kann unbehandelt oder mit einem geeigneten Verfahren vorbehandelt bzw. präformiert dem Reaktor zur Reaktion zugeführt werden. Derartige Verfahren sind beispielsweise in Voorhoeve: "Organohalosilanes-Precursores to Silicones", Elsevier N 1967, S. 129 beschrieben.

In einer bevorzugten Ausführungsform der vorliegenden Erfindung wird bei flüchtigen Selen- und/oder Tellurverbindungen die gewünschte Menge Verbindung dem kontinuierlich über die Kontaktmasse geleiteten Alkylhalogenid entweder in kurzen Intervallen diskontinuierlich oder kontinuierlich zudosiert. Die eingesetzte Menge orientiert sich im diskontinuierlich betriebenen Versuch an der eingesetzten Menge an Kontaktmasse, im kontinuierlich geführten Prozeß zweckmäßigerweise an der Menge an frischem Silicium, Katalysator und gegebenenfalls zusätzlichen Promotorsubstanzen, die meist ebenfalls kontinuierlich in den Reaktor nachgefüllt wird. Über die Gasphase ist eine optimale Verteilung der flüchtigen Selen- und/oder Tellurverbindungen gewährleistet. Die Menge beträgt zwischen 1 und 3000 ppm, bevorzugt zwischen 10 und 500 ppm, bezogen auf das Silicium. Dabei bezieht man sich auf den Selen- bzw. Tellurgehalt der jeweiligen zum Einsatz kommenden Selen- bzw. Tellurverbindung.

In einer weiteren Ausführungsform der Erfindung werden feste oder schwerflüchtige Selen- und/oder Tellurverbindungen sowie elementares Selen und/oder Tellur vorzugsweise dem Silicium bzw. dem Katalysator direkt zugemischt.

Das erfindungsgemäße Verfahren ist auch nicht auf eine bestimmte Verfahrenstechnik bei der Direktsynthese beschränkt. So kann die Reaktion diskontinuierlich oder kontinuierlich geführt werden, und es kann sowohl im Fließbett, im Rührbett als auch im Festbett gearbeitet werden.

Die Vorteile beim Einsatz von Selen und/oder Tellur und/oder mindestens einer selen- und/oder tellurhaltigen Verbindung liegen, wie in den folgenden Beispielen gezeigt wird, darin, daß eine deutliche Senkung des MeH-Anteils sowie bei Kombination mit anderen Promotoren eine deutliche Verbesserung der Produktionsrate sowie der Selektivität erzielt wird.

Die nachfolgenden Beispiele sollen die vorliegende Erfindung näher illustrieren, sind aber keinesfalls einschränkend zu verstehen (%-Angaben bedeuten Gew.-%).

### Ausführungsbeispiele

Bezüglich des Einsatzes des erfindungsgemäßen Katalysators in der Rochow-Synthese wurden die folgenden Experimente in einem Rührbettreaktor aus Glas, innerer Durchmesser = 30 mm, der mit einem Spiralrührer ausgestattet ist, durchgeführt. Zum Einsatz kam ein Silicium mit einer Reinheit von mindestens 98,8 % mit einer Korngrößenverteilung von 71 bis 160 µm.

Die Kontaktmasse bestand aus 40 g Silicium, 3,2 g Kupferkatalysator und 0,05 g ZnO und wurde vor dem Einsatz homogenisiert.

Methylchlorid wurde unter einem Druck von 2 bar von unten über eine Glasfritte durch die Kontaktmasse geleitet. Der Durchsatz an Methylchlorid wurde konstant gehalten und betrug in allen Fällen ca. 1,8 l/h. Nach Durchlaufen der Induktionsphase wurde eine stationäre Versuchsphase bei 300°C eingestellt. Unter diesen Bedingungen wurde die Menge an gebildeten Rohsilan pro Zeiteinheit bestimmt. Die Ermittlung der Einzelbestandteile erfolgte gaschromatographisch.

Die angegebenen Werte sind Mittelwerte aus jeweils vier Einzelbestimmungen, jeder Versuch wurde mindestens einmal reproduziert. Alle Mengenangaben beziehen sich auf eingesetztes Silicium.

### Beispiel 1

Dieses Beispiel zeigt den Einfluß eines Selenzusatzes zur Kontaktmasse in der Rochow-Synthese. Selen wurde dabei als Metall zugefügt. Das eingesetzte Silicium wies dabei die folgenden Hauptnebenbestandteile auf: Al: 0,22 %; Ca: 0,064 %; Fe: 0,40 %; Ti: 0,030 %. Einwaagen und Ergebnisse sind in der nachfolgenden Tabelle 1 aufgeführt.

**Tabelle 1**

| Versuch | Zusatz Se [ppm] | Prod.-Rate [g/h] | MeH [%]¹⁾ | Di [%]¹⁾ | Tri/Di¹⁾ |
|---|---|---|---|---|---|
| 1 | 25 | 6,4 | 1,8 | 88,4 | 0,070 |
| 2 | 50 | 6,5 | 1,4 | 87,8 | 0,077 |
| 3 | 100 | 6,5 | 1,2 | 86,3 | 0,098 |
| 4 | 0 | 6,9 | 2,3 | 89,7 | 0,058 |

| | | | | | |
|---|---|---|---|---|---|
| 1) MeH: Methylhydrogendichlorsilan MeHSiCl₂; Di: Dichlordimethylsilan Me₂SiCl₂; Tri/Di: (Trichlormethylsilan MeSiCl₃/Dichlordimethylsilan Me₂SiCl₂); Prozentangaben (Gew.%) beziehen sich auf die angefallenen Monomeren | | | | | |

Es zeigte sich, daß bei Zusatz von Selen zur Kontaktmasse der Anteil an MeH bei vergleichbarer Ausbeute deutlich zurückging.

### Beispiel 2

Dieses Beispiel zeigt den Einfluß einer Kombination von Selen- und Zinnzusatz zur Kontaktmasse in der Rochow-Synthese. Selen und Zinn wurden als Metalle zugefügt. Das eingesetzte Silicium wies dabei die folgenden Hauptnebenbestandteile auf Al: 0,22%; Ca: 0,053%; Fe: 0,45%; Ti: 0,025%. Einwaagen und Ergebnisse sind in der nachfolgenden Tabelle 2 aufgeführt.

**Tabelle 2**

| Versuch | Zusatz Selen [ppm] | Zusatz Zinn [ppm] | Prod.-Rate [g/h] | MeH [%]¹⁾ | Di [%]¹⁾ | Tri/Di¹⁾ |
|---|---|---|---|---|---|---|
| 5 | 50 | 0 | 6,6 | 1,3 | 88,0 | 0,076 |
| 6 | 0 | 50 | 8,4 | 1,5 | 90,6 | 0,056 |
| 7 | 50 | 25 | 6,9 | 1,6 | 88,2 | 0,073 |
| 8 | 50 | 50 | 7,2 | 1,6 | 88,6 | 0,069 |
| 9 | 50 | 100 | 8,8 | 1,1 | 88,6 | 0,074 |
| 10 | 0 | 0 | 6,4 | 2,3 | 87,2 | 0,077 |

| | | | | | | |
|---|---|---|---|---|---|---|
| ¹⁾ MeH: Methylhydrogendichlorsilan MeHSiCl₂; Di: Dichlordimethylsilan Me₂SiCl₂; Tri/Di: (Trichlormethylsilan MeSiCl₃/Dichlordimethylsilan Me₂SiCl₂); Prozentangaben (Gew.%) beziehen sich auf die angefallenen Monomeren | | | | | | |

Bei vergleichbaren Selektivitäten wurde durch Kombination von Selen- und Zinnzusatz die Ausbeute gesteigert sowie der Anteil an MeH im Monomerengemisch halbiert.

### Beispiel 3

Dieses Beispiel zeigt den Einfluß einer Kombination von Selen- und Phosphorzusatz zur Kontaktmasse in der Rochow-Synthese. Selen wurde als Metall, Phosphor in Form von Cu₃P zugesetzt. Es wurde dasselbe Silicium wie in Beispiel 2 verwendet. Einwaagen und Ergebnisse sind in der nachfolgenden Tabelle 3 aufgeführt.

**Tabelle 3**

| Versuch | Zusatz Selen [ppm] | Zusatz Phosphor [ppm] | Prod.-Rate [g/h] | MeH [%]¹⁾ | Di [%]¹⁾ | Tri/Di¹⁾ |
|---|---|---|---|---|---|---|
| 11 | 0 | 100 | 4,4 | 1,4 | 91,2 | 0,052 |
| 12 | 50 | 100 | 5,2 | 1,3 | 91,6 | 0,056 |
| 13 | 100 | 100 | 5,6 | 0,8 | 90,8 | 0,060 |

| | | | | | | |
|---|---|---|---|---|---|---|
| ¹⁾ MeH: Methylhydrogendichlorsilan MeHSiCl₂; Di: Dichlordimethylsilan Me₂SiCl₂; Tri/Di: (Trichlormethylsilan MeSiCl₃/Dichlordimethylsilan Me₂SiCl₂); Prozentangaben (Gew.%) beziehen sich auf die angefallenen Monomeren | | | | | | |

Selen zeigt in Gegenwart von Phosphor eine ausbeutesteigernde Wirkung. Der Anteil an MeH sank unter 1 %.

### Beispiel 4

Dieses Beispiel zeigt den Einfluß einer Kombination von Selen- und Aluminiumzusatz zur Kontaktmasse in der Rochow-Synthese. Selen wurde als Metall, Aluminium in Form von Cu₉Al₄ zugesetzt. Es wurde dasselbe Silicium wie in Beispiel 2 verwendet. Einwaagen und Ergebnisse sind in der nachfolgenden Tabelle 4 aufgeführt.

**Tabelle 4**

| Versuch | Zusatz Selen [ppm] | Zusatz Aluminium [ppm] | Prod.-Rate [g/h] | MeH [%]¹⁾ | Di [%]¹⁾ | Tri/Di¹⁾ |
|---|---|---|---|---|---|---|
| 14 | 0 | 50 | 6,8 | 1,5 | 88,9 | 0,070 |
| 15 | 50 | 25 | 7,1 | 1,8 | 88,4 | 0,074 |
| 16 | 50 | 50 | 7,5 | 1,3 | 88,9 | 0,071 |
| 17 | 50 | 100 | 7,6 | 1,3 | 88,0 | 0,078 |

| | | | | | | |
|---|---|---|---|---|---|---|
| ¹⁾ MeH: Methylhydrogendichlorsilan MeHSiCl₂; Di: Dichlordimethylsilan Me₂SiCl₂; Tri/Di: (Trichlormethylsilan MeSiCl₃/Dichlordimethylsilan Me₂SiCl₂); Prozentangaben (Gew.%) beziehen sich auf die angefallenen Monomeren | | | | | | |

Selen besitzt in Gegenwart von Aluminium eine ausbeutesteigernde Wirkung. Der Anteil an MeH ist im Vergleich zur unpromotierten Kontaktmasse niedrig.

### Beispiel 5

Dieses Beispiel zeigt den Einfluß einer Kombination von Selen-, Zinn- und Phosphorzusatz zur Kontaktmasse auf das Ergebnis der Rochow-Synthese. Selen und Zinn wurden als Metall, Phosphor in Form von PCl₃ zugesetzt. Es wurde das selbe Silicium wie in Beispiel 2 verwendet. Einwaagen und Ergebnisse sind in der nachfolgenden Tabelle 5 aufgeführt.

**Tabelle 5**

| Versuch | Zusatz Selen [ppm] | Zusatz Zinn [ppm] | Zusatz Phosphor [ppm] | Prod.-Rate [g/h] | MeH [%]¹⁾ | Di [%]¹⁾ | Tri/Di¹⁾ |
|---|---|---|---|---|---|---|---|
| 18 | 0 | 0 | 50 | 6,5 | 1,8 | 90,3 | 0,059 |
| 19 | 50 | 50 | 0 | 7,2 | 1,6 | 88,6 | 0,069 |
| 20 | 50 | 0 | 50 | 6,0 | 1,9 | 87,7 | 0,078 |
| 21 | 50 | 50 | 50 | 8,3 | 1,2 | 91 | 0,053 |
| 22 | 50 | 50 | 100 | 8,4 | 1,2 | 92,4 | 0,043 |

| | | | | | | | |
|---|---|---|---|---|---|---|---|
| ¹⁾ MeH: Methylhydrogendichlorsilan MeHSiCl₂; Di: Dichlordimethylsilan Me₂SiCl₂; Tri/Di: (Trichlormethylsilan MeSiCl₃/Dichlordimethylsilan Me₂SiCl₂); Prozentangaben (Gew.%) beziehen sich auf die angefallenen Monomeren | | | | | | | |

Tabelle 5 zeigt, daß durch die Kombination der drei Promotoren sowohl die Ausbeute, als auch die Selektivität gute Werte erreicht. Der Anteil an MeH ist im Vergleich zur unpromotierten Kontaktmasse sehr niedrig.

## Patentansprüche

1. Verfahren zur Herstellung von Alkylhalogensilanen durch Umsetzung einer Kontaktmasse, die neben Silicium und mindestens einem Promotor noch Kupfer und/oder mindestens eine kupferhaltige Verbindung als Katalysator enthält, mit einem Alkylhalogenid, dadurch gekennzeichnet, daß als Promotor Selen und/oder Tellur und/oder mindestens eine selen- und/oder tellurhaltige Verbindung eingesetzt wird.

2. Verfahren nach Anspruch 1, dadurch gekennzeichnet, daß das Selen elementar und/oder die selenhaltige Verbindung in Form von SeOCl₂, SeCl₄ und/oder Se₂Cl₂ eingesetzt wird.

3. Verfahren nach Anspruch 1 oder 2, dadurch gekennzeichnet, daß die selenhaltige Verbindung die Elemente Al, Zn, Sn, Si, Cu, Fe, Ca und/oder Ti enthält.

4. Verfahren nach einem oder mehreren der Ansprüche 1 bis 3, dadurch gekennzeichnet, daß das Selen und/oder die selenhaltige Verbindung, gerechnet als Selen, in Mengen von 1 bis 3.000 ppm, bezogen auf Silicium, eingesetzt wird.

5. Verfahren nach einem oder mehreren der Ansprüche 1 bis 4, dadurch gekennzeichnet, daß das Tellur elementar und/oder die tellurhaltige Verbindung in Form von CsTeCl₅, RbTeCl₆, CsTeCl₆, TeCl₂·[SC(NH₂)₂], Al₂Te₃, Cu₂Te, ZnTe sowie TeCl₄ eingesetzt wird.

6. Verfahren nach einem oder mehreren der Ansprüche 1 bis 5, dadurch gekennzeichnet, daß Tellur und/oder die tellurhaltige Verbindung, gerechnet als Tellur, in einer Menge von 1 bis 3000 ppm eingesetzt wird.

7. Verfahren nach einem oder mehreren der Ansprüche 1 bis 6, dadurch gekennzeichnet, daß zusätzlich als Promotorsubstanzen Zinn, Zink, Phosphor, Schwefel, Aluminium und Indium, alleine oder in Kombination, in elementarer Form oder in Form ihrer Verbindungen eingesetzt werden.

8. Verfahren nach einem oder mehreren der Ansprüche 1 bis 7, dadurch gekennzeichnet, daß als kupferhaltige Verbindung teiloxidiertes Kupfer mit den Bestandteilen Cu°, Cu₂O und/oder CuO eingesetzt wird.

9. Verfahren nach einem oder mehreren der Ansprüche 1 bis 8, dadurch gekennzeichnet, daß Selen und/oder Tellur und/oder mindestens eine selen- und/oder tellurhaltige Verbindung dem Silicium, dem Kupfer und/oder der kupferhaltigen Verbindung zudosiert wird.

10. Verfahren nach einem oder mehreren der Ansprüche 1 bis 9, dadurch gekennzeichnet, daß man als Alkylhalogenid Methylchlorid einsetzt.
